Europäisches Patentamt

European Patent Office

Office européen des brevets

(11) Publication number: **0 300 619**
**A2**

## (12) EUROPEAN PATENT APPLICATION

(21) Application number: 88305610.3

(51) Int. Cl.⁴: **B65G 1/12 , B65G 47/57**

(22) Date of filing: 20.06.88

The title of the invention has been amended (Guidelines for Examination in the EPO, A-III, 7.3).

(30) Priority: 20.06.87 GB 8714496
10.05.88 GB 8811011

(43) Date of publication of application:
25.01.89 Bulletin 89/04

(84) Designated Contracting States:
AT BE CH DE ES FR GR IT LI LU NL SE

(71) Applicant: ROBOLIFT LIMITED
Sterling House 165/175 Farnham Road
Slough Berkshire(GB)

(72) Inventor: Cunningham-Oakes, Barry John
1, Brett Close Kingsey Meadow
Thame Oxon, OX9 3LE(GB)

(74) Representative: Quest, Barry et al
M'CAW & Co. 41-51 Royal Exchange Cross
Street
Manchester M2 7BD(GB)

(54) Transferring device for conveyors.

(57) Conveyor equipment, for moving loads (9) from a loading location (13,15) to a discharge location (14,16) situated one above the other, comprises a conveyor belt (1) to which load supports (4) are pivotally attached by hinges (5). In their operating position the load supports extend perpendicularly from the conveyor belt (1) but on reaching the discharge location (14,16) can tilt downwardly to allow the load (9) to move onto receiving means (6,7,10,11,12). If the discharge location (14) is uppermost, tilting of the supports (4) is by engagement between the support (4) and a pivotally mounted platform (7) provided at the upper end of a discharge conveyor (6), and the load (9) is displaced from the support (4) onto the platform (7) by a curved frame (8). If the discharge location (16) is lowermost the movement of the load (9) is intercepted by arms (12) attached to the upper ends of a downwardly inclined slide (11) which leads to a discharge conveyor (10).

*Fig.1*

## CONVEYOR EQUIPMENT

This invention relates to conveyor equipment for moving loads between vertically separated locations.

In large premises where goods are stored and handled at different levels, e.g. in large retail premises where goods are stored at a lower warehouse level and are put on sale to customers at a higher shop-floor level, there is a need for a power-driven hoist or elevator which can be used to move loads conveniently between the levels. However, especially where the goods are of a fragile nature, there is the problem of ensuring easy and convenient movement of the goods off the conveyor equipment without undue risk of damage to the goods.

An object of the present invention is to provide conveyor equipment of simple and inexpensive construction with which the abovementioned problem can be overcome or at least appreciably reduced.

According to the present invention there is provided conveyor equipment for moving loads from a loading location to a discharge location situated at a different elevation from said loading location, said equipment comprising a plurality of linked road supports, drive means for driving said linked supports from said loading location to said discharge location, and a discharge device for discharging loads on said supports to a receiving structure, characterised in that said discharge device comprises means for tilting from an operating position each said support downwardly at said discharge location and control means for effecting controlled movement of a load on such tilted support from the support onto said receiving structure.

With this arrangement smooth transfer of the load onto the receiving structure can be achieved in a simple and convenient manner whereby undue risk of damage to the load can be avoided.

The said supports may be attached to a conveyor such as a conveyor belt or chain, and may comprise plate-shaped flights or other structures which may in its operating position project transversely from the conveyor. In particular, the supports may project substantially perpendicularly from the conveyor. In order to accommodate the required tilting of the supports, hinge joints may be provided between the supports and the conveyor. Each hinge joint may be defined by separate parts which are movably interconnected, or by an integral linkage formed from flexible material. Said discharge location may be above said loading location, in which case tilting may be effected by engagement of the supports with the receiving structure so that the supports are deflected downwardly as they are driven upwards by the drive means. Alternatively, a separate deflection arrangement may be provided, or tilting may be achieved by moving the supports through an appropriately curved or inclined path.

The receiving structure may comprise a platform and this may also be arranged to tilt on transfer of a load thereto from a tilted said support. Thus, the platform may be pivotally mounted and tilting may be effected by engagement of the support beneath the platform, or via a separate mechanism. The platform may be arranged to guide the transfer of a discharged load to a roller conveyor or other transport device.

Said control means may comprise displacing means, and conveniently this may comprise a fixed structure which is positioned at the said upper discharge location and is arranged to engage a load on a tilted said support and cause the load to be deflected off the support as the drive means drives the support upwardly. This fixed structure may comprise a curved frame or the like.

Alternatively said discharge location may be below said loading location, in which case said control means may comprise means for intercepting a load on said tilted support so that the load is deposited on said interception means, and said receiving structure may comprise a downwardly directed slide track connected to said interception means to receive said load therefrom.

With regard to the interception means, conveniently this may comprise arms disposed on opposite sides of the path of movement of the supports, so that loads projecting beyond the supports are picked up by the arms. The slide track may comprise inclined rails linked or formed integrally with said arms and such track may lead to a roller conveyor or other transport device.

The two alternative aspects of the invention may be used in conjunction with each other so that loads can be transferred upwardly and downwardly from respective lower and upper loading locations to respective upper and lower discharge locations.

The invention will now be described further by way of example only and with reference to the accompanying drawings in which:-

Figure 1 is a diagrammatic perspective view of one form of conveyor equipment according to the invention;

Figure 2 is a side view of a top end of the equipment of Figure 1;

Figure 3 is a side view of a bottom end of the equipment of Figure 1;

Figure 4 is an end view of the bottom end of the equipment of Figure 1, and

Figures 5 and 6 are side views of an alternative embodiment of flight in the conveyor equipment of Figs. 1 to 4.

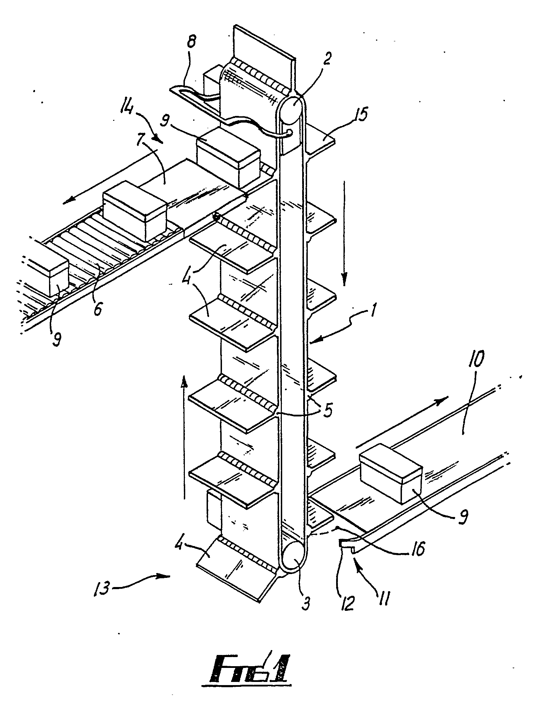

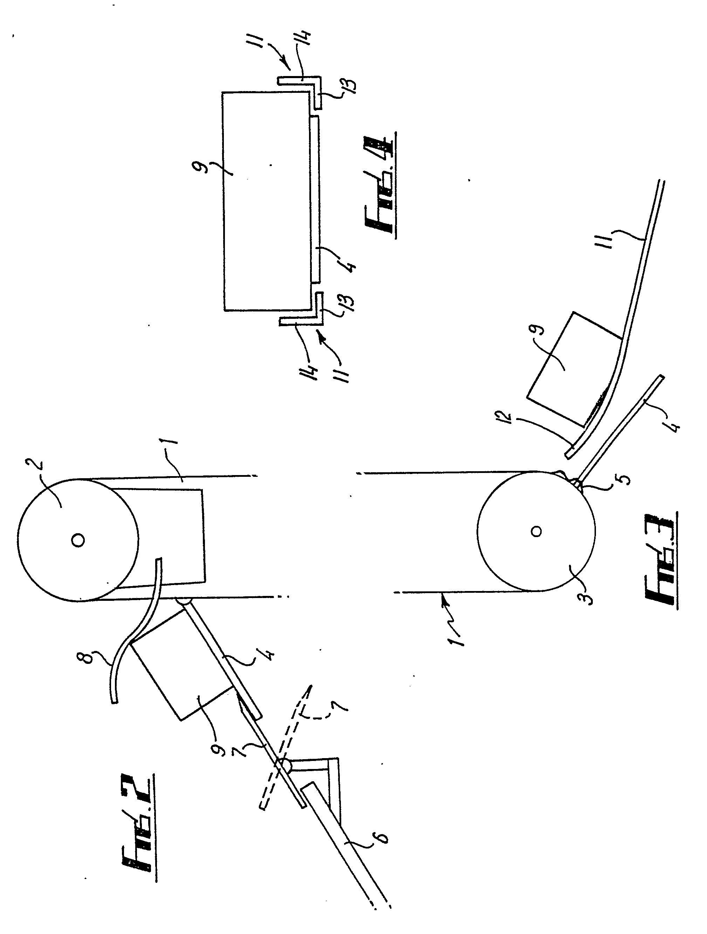

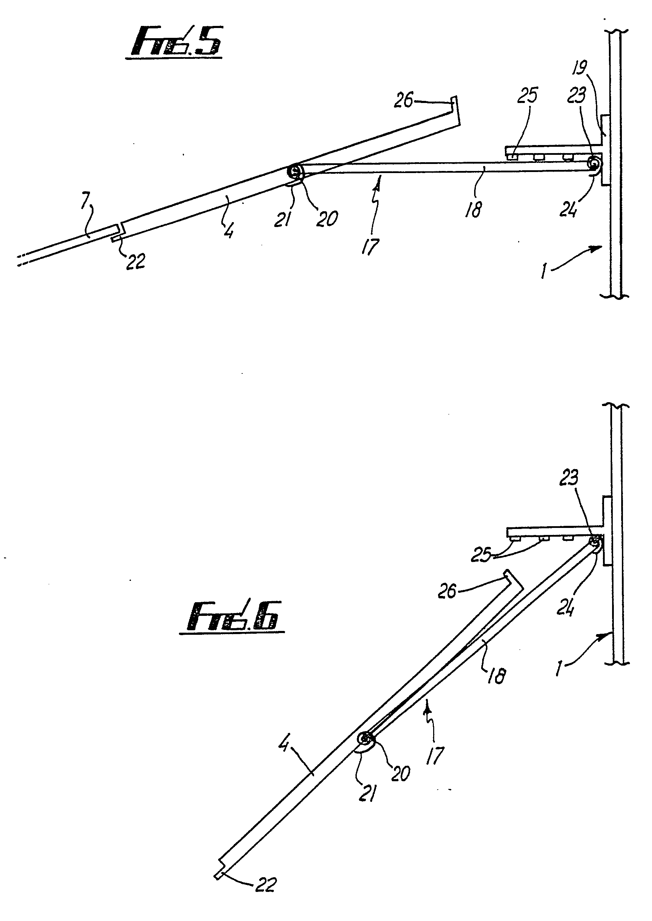

Figures 1 to 3 show conveyor equipment for moving loads between upper and lower levels in premises, for example, for moving boxed shoes between upper and lower levels in a large shop or warehouse or the like.

The equipment comprises an endless conveyor belt 1 which runs around top and bottom drums 2, 3 so that the belt 1 is vertical between the drums 2, 3. The top drum 2 is drivably connected to an electric motor (not shown). At regular intervals rectangular plates 4 are secured along edges to the outer surface of the belt via hinge joints 5. The hinge joints 5 may be defined by sections of elastomeric material (such as rubber) formed integrally with the surface of the belt 1 and the surfaces of the supports 4. The supports 4 are biassed (e.g. by the resilience of the integral elastomeric hinge sections) to positions at which they extend perpendicularly to the belt surface.

One vertical run of the conveyor belt extends from a loading location 13 at the lower level to a discharge location 14 at a higher level. At the loading location 13 boxes of shoes are placed individually on the supports 4 by hand or automatically from a horizontal conveyor or other transport device (not shown). At the discharge location 14, there is a fixed roller conveyor 6 which is slightly downwardly inclined away from the conveyor belt 1. The higher end of the roller conveyor 6 is spaced slightly away from the path of movement of the supports 4, and a tilt platform 7 is pivotally mounted on such higher end. As indicated in dotted lines in Figure 2, the tilt platform 7 is pivotable about a horizontal axis between opposite edges of the platform 7, such that the platform 7 tends to tilt under its own weight (and/or spring biassing) towards the conveyor 1. The platform 7 is disposed in the path of movement of the supports 4, such that each support 4 engages the platform 7 and causes it to tilt gradually downwardly away from the belt 1 towards the roller conveyor 6 as shown in full lines in Figure 2. At the same time the support plate 4 is deflected gradually downwardly into an inclined position. A curved frame 8 is fixed around the belt 1 immediately above the discharge location so that the load 9 on the tilted support 4 engages the frame 8 and as a consequence of such engagement is displaced smoothly off the support 4 onto the platform 7 as these are caused to incline gradually downwardly. From the platform 7 the load 9 slides onto the conveyor 6 so as to slide therealong to its desired destination. The platform 7 may be made from any smooth material such as polished metal, nylon etc.

The support 4 and the platform 7 return to their original positions after the load 9 has been discharged and the support 4 has moved upwardly clear of the platform 7.

The other vertical run of the belt 1 extends from a second loading location 15 at the upper level to a second discharge location 16 at the lower level. Loads 9 are placed individually on the supports 4 at the upper level by hand or automatically by means of a conveyor. At the discharge location 16 there is a fixed roller conveyor 10 which is slightly inclined downwardly away from the conveyor belt 1. The higher end of the roller conveyor 10 is spaced slightly away from the path of movement of the supports 4, and rails 11 are fixed to the conveyor end and project one on each side of the path of movement of the supports 4. The rails 11 are upwardly curved and terminate in integral freely projecting arms 12.

The arms 12 are disposed in the region of the bottom conveyor drum 3 so that as the supports 4 pivot downwardly, following the curvature of the drum 3, they pass between the arms 12. Loads 9 on the supports 4 which project beyond the sides of the supports 4 engage the arms 12 and are thereby lifted off the supports 4 and transferred onto the rails 11 so as to slide downwardly onto the roller conveyor 10. The load-engaging surface of the rails 11 may be formed from any smooth material such as polished metal, nylon etc. These surfaces may be the top surfaces. Alternatively, as shown in Figure 4, the rails 11 may be L-shaped with the bottom short limbs 13 facing towards each other whereby the load 9 slides on the short limbs 13 and against the inner surfaces of the upright longer limbs 14.

As an alternative to the plates 4 described above, the load support 17 as shown in Figs. 5 and 6 may be provided for added safety of the conveyor equipment in use. In this case the load support 17 comprises a load support plate 4, a mounting plate or arms 18 and an attachment bracket 19 which is secured to the belt 1 by rivets or other suitable means. The support plate 4 is pivotally attached at its mid point 20 to the mounting plate or arms 18 and is biassed by spring 21 into alignment therewith. However, when lips 22 of the plate 4 engage the platform 7, the plate 4 tilts as shown in Fig. 5 and as previously described, to allow discharge of a load from the plate 4. However, if the plate 4 meets an obstruction, the plate 4 and mounting plate or arms 18 can pivot about axis 23 as shown in Fig. 6 to prevent damage, an accident or other undesirable occurrence. In the absence of any obstruction, the mounting plate or arms 18 is biassed by spring 24 into a normal operating position extending perpendicularly of the belt 1 as shown in Fig. 5 and is retained in that position by means of magnets 25. A "back-stop" in the form of a lip 26 is provided along the rear edge of the plate 4 to locate the load 9 on the plate 4.

With the arrangement described above loads can be transferred easily and conveniently between upper and lower levels without undue risk of damage to the loads.

It is of course to be understood that the invention is not intended to be restricted to the details of the above embodiments, which are described by way of example only.

Thus, for example, instead of using inclined roller conveyors 6, 10 at the discharge location, it is possible to use powered roller beds or powered belts, or simply a smooth, inclined surface, or any other suitable arrangement.

## Claims

1. Conveyor equipment for moving loads from a loading location to a discharge location situated at a different elevation from said loading location, said equipment comprising a plurality of linked load supports, drive means for driving said linked supports from said loading location to said discharge location, and a discharge device for discharging loads on said supports to a receiving structure, characterised in that said discharge device comprises means (7) for tilting from an operating position each said support (4) downwardly at said discharge location, and control means (8) for effecting controlled movement of a load on said tilted support from the support onto said receiving structure.

2. Conveyor equipment according to claim 1, wherein said drive means comprises a conveyor belt, characterised in that each of said supports (4) is pivotally attached to the conveyor belt (1) and is biased towards said operating position.

3. Conveyor equipment according to claim 1 or 2, wherein said discharge location is above said loading location, characterised in that said tilting means (7) comprises said receiving structure and is in the form of a platform which is pivotally mounted so as to tilt on engagement therewith by one of said supports (4).

4. Conveyor equipment according to claim 3, characterised in that said platform (7) is pivotally mounted on an upper end of a discharge conveyor (6).

5. Conveyor equipment according to any one of claims 1 to 4, characterised in that said control means (8) comprises displacing means in the form of a fixed structure positioned at said discharge location and arranged to engage a load on a tilted support (4) to cause said load (9) to be displaced from said support (4) onto said receiving structure (7).

6. Conveyor equipment according to claim 5, characterised in that said displacing means (8) comprises a curved frame.

7. Conveyor equipment according to claim 1 or 2, wherein said discharge location is below said loading location, characterised in that said control means comprises means (12) for intercepting a load on a tilted support (4) whereby said load is deposited on said interception means (12).

8. Conveyor equipment according to claim 7, characterised in that said receiving structure comprises a downwardly directed slide track (11) connected to said interception means (12).

9. Conveyor equipment according to claim 7 or 8, characterised in that said interception means comprises arms (12) disposed on opposed sides of a path of movement of said supports (4).

10. Conveyor equipment according to claim 8 or claim 9 when dependent thereon, characterised in that said slide track (11) comprises inclined rails connected to said arms (12).

_Fig.1_

FIG.2

FIG.3

FIG.4

EP 0 300 619 A2

_FIG.5_

_FIG.6_